# EUROPÄISCHE PATENTANMELDUNG

(11) **EP 1 591 291 A1**
(43) Veröffentlichungstag der Anmeldung: **02.11.2005**
(21) Anmeldenummer: 05009281.6
(22) Anmeldetag: 28.04.2005
(51) Int. Cl.: B60J 10/00, B61D 19/02, B60J 10/08

(54) **Dichtungseinrichtung für eine Fahrgasttür an Fahrzeugen des öffenlichen Personenverkehrs**

(30) Priorität: 30.04.2004 DE 202004006968 U
(71) Anmelder: Gebrüder Bode GmbH & Co.KG, 34123 Kassel (DE)
(72) Erfinder: Horn, Manfred, 34260 Kaufungen (DE)
(74) Vertreter: Feder, Wolf-Dietrich

(57) **Zusammenfassung**

Eine Dichtungseinrichtung für eine Fahrgasttür an Fahrzeugen des öffentlichen Personenverkehrs, bei welcher an zwei im geschlossenen Zustand der Tür einander gegenüberliegenden vertikalen Kanten zweier Türblätter jeweils als Fingerschutzprofil ausgebildete Dichtungsleisten (1, 2) aus elastomerem Material angeordnet sind. An mindestens einer der Dichtungsleisten sind mit der jeweils anderen Dichtungsleiste zusammenwirkende Dichtungslippen (3.1, 3.2) angeordnet. Eine Dichtungsleiste weist an ihrer der anderen Dichtungsleiste im geschlossenen Zustand der Tür zugewandten Vorderfläche eine Vertiefung (1.1) auf, in die eine an der Vorderfläche der anderen Dichtungsleiste angeordnete Rippe (2.1) eingreift. Die Vertiefung (1.1) und die Rippe (2.1) sind als mit ihren Seitenwänden ineinandergreifende Nut-Feder-Verbindung ausgebildet. Die Dichtungslippen (3.1, 3.2) sind einander gegenüberliegend an den inneren Seitenwänden der Nut derart angeordnet, dass sie zum Nutengrund hin ausgerichtet sind und sich beim Eindringen der Feder in die Nut dichtend an die äußeren Seitenwände der Feder anlegen.

## Beschreibung

Die Erfindung betrifft eine Dichtungseinrichtung für eine Fahrgasttür an Fahrzeugen des öffentlichen Personenverkehrs mit den Merkmalen aus dem Oberbegriff des Patentanspruchs 1. Eine derartige Dichtungseinrichtung ist beispielsweise in EP 1 288 420 A1 beschrieben.

Der Erfindung liegt die Aufgabe zugrunde, eine derartige Dichtungseinrichtung so auszubilden, dass sie eine besonders gute Dichtigkeit insbesondere gegen auf die Außenseite der Tür auftreffendes Spritzwasser besitzt. Weiterhin sollte die Möglichkeit geschaffen werden, die Schaltleiste der Einklemmsicherungseinrichtung so innerhalb der Dichtungsleiste anzuordnen, dass sie einerseits gegen Beschädigungen gesichert ist und andererseits leicht anspricht, so dass eine rasche Wirkung der Einklemmsicherungseinrichtung sichergestellt ist.

Die Lösung dieser Aufgabe erfolgt erfindungsgemäß mit den Merkmalen aus dem kennzeichnenden Teil des Patentanspruchs 1. Eine vorteilhafte Weiterbildung der Erfindung ist im abhängigen Anspruch beschrieben.

Ein Grundgedanke der Erfindung besteht darin, die einander gegenüberliegenden Dichtungsleisten so auszubilden, dass sie in einer echten Nut-Feder-Verbindung ineinander greifen und somit ein absolut dichtes Schließen der Türen ermöglichen, wobei die bei der bekannten Anordnung außen an der Dichtungsleiste angeordneten Dichtungslippen bei der erfindungsgemäßen Dichtungseinrichtung innerhalb der Nut der Nut-Feder-Verbindung angeordnet sind, was die Dichtungswirkung noch verbessert.

Bei einer besonders vorteilhaften Ausbildung der erfindungsgemäßen Dichtungseinrichtung ist eine elektrische oder pneumatische Schaltleiste einer Einklemmsicherungseinrichtung in einer Hohlkammer angeordnet, deren Seitenwände faltenbalgartig ausgebildet sind. Diese faltenbalgartige Anordnung ermöglicht in allen Richtungen ein absolut sicheres Ansprechen der Schaltleiste und damit der Einklemmsicherungseinrichtung, wenn ein Hindernis, beispielsweise ein Fahrgast, den Türlauf stört. In diesem Fall reversiert die Tür sogleich und der Fahrgast kann sich befreien.

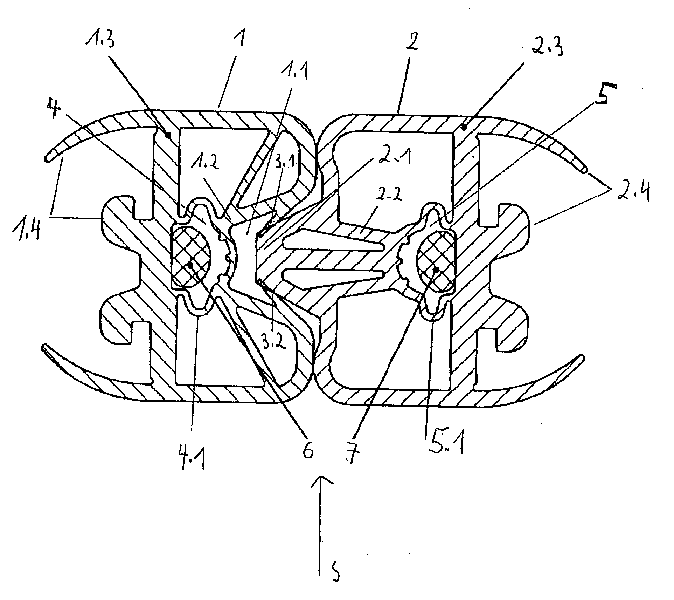

Im folgenden wird anhand der beigefügten Zeichnung ein Ausführungsbeispiel für eine Dichtungseinrichtung nach der Erfindung näher erläutert:

Die Zeichnung zeigt im Horizontalschnitt zwei Dichtungsleisten 1 und 2, die einander gegenüberliegend und ineinander greifend angeordnet sind, wie dies beispielsweise der Fall ist, wenn die Dichtungsleisten in nicht dargestellter Weise an den einander gegenüberliegenden Kanten zweier Türblätter beispielsweise einer Schwenkschiebetür angeordnet sind, die sich im geschlossenen Zustand befindet.

Die als Fingerschutzprofile ausgebildeten Dichtungsleisten 1 und 2 bestehen aus elastomerem Material. Die eine Dichtungsleiste 1 besitzt an ihrer der anderen Dichtungsleiste 2 gegenüberliegenden Vorderfläche eine Nut 1.1, während die andere Dichtungsleiste 2 an ihrer der Dichtungsleiste 1 gegenüberliegenden Vorderfläche eine Feder 2.1 aufweist. An den inneren Seitenwänden der Nut 1.1 sind Dichtungslippen 3.1 und 3.2 einander gegenüberliegend derart angeordnet, dass sie zum Nutengrund hin ausgerichtet sind. Wie aus der Zeichnung zu ersehen, legen sich die Dichtungslippen 3.1 und 3.2 beim Eindringen der Feder 2.1 in die Nut 1.1 dichtend an die äußeren Seitenwände der Feder 2.1 an, wodurch an dieser Stelle eine gutsitzende und -dichtende Verbindung geschaffen ist. Wenn nun Spritzwasser beispielsweise in Richtung S auf die äußeren Seitenflächen der Dichtungsleisten 1 und 2 auftrifft, ist der Innenraum hinter der Tür gut gegen das Eindringen des Spritzwassers geschützt.

Im Inneren jeder der Dichtungsleisten 1 und 2 ist im Bereich hinter der Nut 1.1 bzw. hinter der Feder 2.1 eine Hohlkammer 4 bzw. 5 angeordnet, in der eine elektrische oder pneumatische Schaltleiste 6 bzw. 7 einer nicht dargestellten Einklemmsicherungseinrichtung angeordnet ist. Die Vorderseite der Hohlkammer 4 ist über Verbindungsleisten 1.2 mit den Seitenwänden der Nut 1.1 verbunden. Die Vorderseite der Hohlkammer 5 ist über durch das Profil laufende Verbindungsleisten 2.2 mit den Seitenwänden der Feder 2.1 verbunden.

Die Rückseiten der Hohlkammern 4 bzw. 5 sind jeweils an quer durch das Profil laufenden Stützleisten 1.3 bzw. 2.3 abgestützt. Die Seitenwände 4.1 bzw. 5.1 der Hohlkammern sind faltenbalgartig ausgebildet, wobei im dargestellten Ausführungsbeispiel diese faltenbalgartige Ausbildung eine Falte aufweist. Selbstverständlich können an dieser Stelle auch mehrere Falten auftreten. Die oben beschriebene Anordnung und Ausbildung der Hohlkammern 4 und 5 hat zur Folge, dass die Schaltleisten 6 und 7 einerseits gestützt innerhalb der Dichtungsleisten 1 und 2 liegen, andererseits aber so mit den Außenwänden der Dichtungsleisten verbunden sind, dass ein rasches Ansprechen der Schaltleisten bei einem Druck auf die Dichtungsleisten 1 und 2 gewährleistet ist.

Die Dichtungsleiste 1 kann über Dichtungsfüße und Dichtungslippen 1.4 mit der vertikalen Kante eines Türblatts verbunden sein, während die Dichtungsleiste 2 über entsprechende Dichtungsfüße und Dichtungslippen 2.4 mit der vertikalen Kante eines anderen Türblatts verbunden sein kann.

## Patentansprüche

1. Dichtungseinrichtung für eine Fahrgasttür an Fahrzeugen des öffentlichen Personenverkehrs, bei welcher an zwei im geschlossenen Zustand der Tür einander gegenüberliegenden vertikalen Kanten zweier Türblätter jeweils als Fingerschutzprofil ausgebildete Dichtungsleisten aus elastomerem Material angeordnet sind, wobei an mindestens einer der Dichtungsleisten mit der jeweils anderen Dichtungsleiste zusammenwirkende Dichtungslippen angeordnet sind und eine Dichtungsleiste an ihrer der anderen Dichtungsleiste im geschlossenen Zustand der Tür zugewandten Vorderfläche eine Vertiefung aufweist, in die eine an der Vorderfläche der anderen Dichtungsleiste angeordnete Rippe eingreift, **dadurch gekennzeichnet, dass** die Vertiefung und die Rippe als mit ihren Seitenwänden ineinandergreifende Nut-Feder-Verbindung (1.1-2.1) ausgebildet sind und die Dichtungslippen (3.1, 3.2) einander gegenüberliegend an den inneren Seitenwänden der Nut (1.1) derart angeordnet sind, dass sie zum Nutengrund hin ausgerichtet sind und sich beim Eindringen der Feder (2.1) in die Nut (1.1) dichtend an die äußeren Seitenwände der Feder (2.1) anlegen.

2. Dichtungseinrichtung nach Anspruch 1, **dadurch gekennzeichnet, dass** im Inneren jeder Dichtungsleiste (1, 2) im Bereich hinter der Nut (1.1) bzw. hinter der Feder (2.1) eine Hohlkammer (4, 5) zum Aufnehmen einer elektrischen oder pneumatischen Schaltleiste (6, 7) einer Einklemmsicherungseinrichtung angeordnet ist, deren Vorderseite über durch das Profil laufende Verbindungsleisten (1.2, 2.2) mit den Seitenwänden der Nut (1.1) bzw. der Feder (2.1) verbunden ist, während sich die Rückseite der Hohlkammer jeweils an einer quer durch das Profil laufenden Stützleiste (1.3, 2.3) abstützt und die Seitenwände (4.1, 5.1) der Hohlkammer faltenbalgartig mit mindestens einer Falte ausgebildet sind.
